# FASCICULE DE BREVET EUROPEEN

(11) **EP 3 041 698 B1**
(45) Date de publication et mention de la délivrance du brevet: **19.05.2021**
(21) Numéro de dépôt: 14777719.7
(22) Date de dépôt: 05.09.2014
(51) Int. Cl.: B60J 5/10, B60J 5/04

(54) **CAISSON INTÉRIEUR POUR HAYON DE VÉHICULE, AVEC PANNEAU TECHNIQUE RAPPORTÉ**
INNERER KASTEN FÜR EINE HECKKLAPPE MIT EINER DARAN BEFESTIGTEN TECHNISCHEN TAFEL
INNER BOX FOR A VEHICLE TAILGATE, WITH A TECHNICAL PANEL FITTED THERETO

(30) Priorité: 06.09.2013 FR 1358548
(43) Date de publication de la demande: 13.07.2016
(73) Titulaire: Compagnie Plastic Omnium, 69007 Lyon (FR)
(72) Inventeur: DEMANGE, Jean-Yves, F-01500 Amberieu en Bugey (FR); COUDRON, Philippe, F-69300 Caluire & Cuire (FR)
(74) Mandataire: Remy, Vincent Noel Paul
(86) Numéro de dépôt international: PCT/FR2014/052203
(87) Numéro de publication internationale: WO 2015/033076

(56) Documents cités:
- WO-A1-2004/060705
- WO-A1-2006/042956
- WO-A1-2007/111788
- FR-A1- 2 416 809
- US-A1- 2005 212 324
- US-A1- 2006 191 206
- US-A1- 2007 220 811
- US-B2- 7 380 865

## Description

La présente invention concerne le domaine technique des ouvrants arrière de véhicules automobiles, souvent appelés hayons Un tel ouvrant est connu, par exemple, du document US 2006/191206 A1.

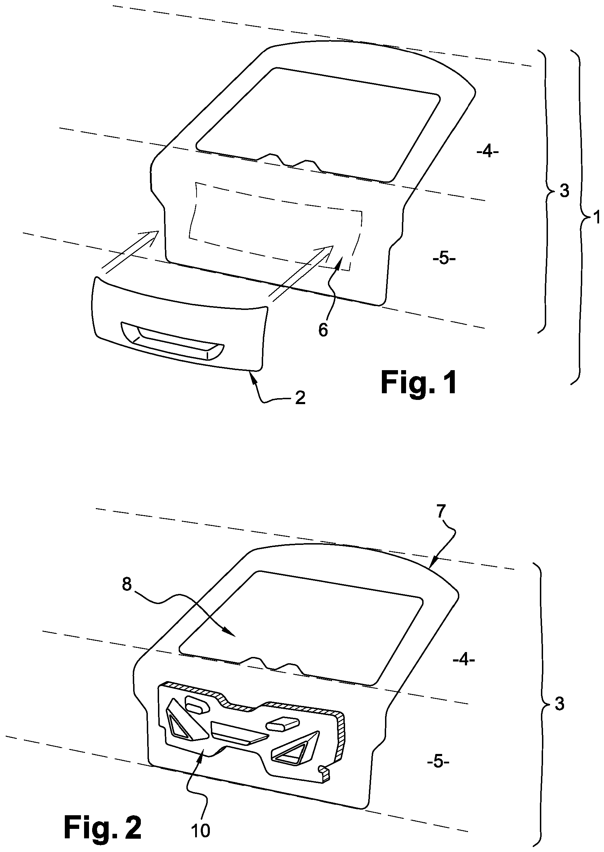

Généralement, un hayon (1) se compose d'une peau extérieure (2), constituant un panneau monobloc ou bi bloc, et intégrant en totalité ou en partie certains des équipements extérieurs visibles depuis l'extérieur du véhicule (bloc optique, commande d'ouverture du hayon ou de la lunette, emblème, système de lavage-essuyage, serrure, butées, plaque d'immatriculation...), et d'un caisson intérieur (3). La figure 1 illustre un tel hayon.

Généralement, un caisson intérieur se compose :
- d'une partie supérieure (4) comportant une ouverture prévue pour accueillir une lunette arrière ;
- d'une partie inférieure (5), de type "panneau plein" (contrairement à la partie supérieure) dont la zone centrale (6) comporte les éléments techniques suivants :
   - des trous ou orifices qui permettent d'implanter ou de faire traverser des éléments tels que des câblages, des tringles, des tuyaux, des interfaces de fixation ;
   - des interfaces de fixations telles que des pistes de collage ou des trous de rivetage, pour des systèmes tels que des serrures motorisées ou des moteurs de lave vitre... ;
   - des formes de renfort mécanique comme des nervures ou bossages.

La très grande majorité des caissons intérieurs de l'état de la technique sont réalisés en acier. Une minorité de caissons intérieurs de hayon sont réalisés en matériau thermoplastique.

Il est connu que la matière thermoplastique présente une faible limite élastique (début de déformation plastique à basse contrainte) et donc une résistance à la rupture relativement basse et peut être sujette à une fatigue mécanique au cours de son utilisation. Pour assurer la tenue géométrique d'un caisson intérieur réalisé en matière thermoplastique tout au long de sa durée d'utilisation, malgré les nombreuses opérations d'ouverture et de fermeture qu'il subit, il est connu de rapporter sur le caisson intérieur en matière thermoplastique un ou plusieurs renforts métalliques de grande dimension.

Enfin, on connaît également des caissons intérieurs réalisés en matière plastique thermodurcissable. Cette matière présente une meilleure tenue à la déformation, mais présente l'inconvénient d'être plus dense que la matière thermoplastique.

De plus, pour réaliser le panneau technique central d'un caisson intérieur en matière plastique thermodurcissable, il est nécessaire de reprendre le caisson. En effet, les procédés de moulage en matière plastique thermodurcissable ne permettent pas de réaliser facilement dans des conditions industrielles, notamment de grande série, des pièces présentant des zones évidées (trou, lumière, ouverture...), plus particulièrement s'ils sont nombreux et de petites dimensions. Ces évidements, nécessaires à l'intégration de fonctions en assemblage, doivent alors être réalisés suite au moulage, par des opérations de reprise en usinage par enlèvement de matière, ce qui présente de nombreux inconvénients : ajout d'opérations supplémentaires dans la gamme opératoire de production impliquant un stockage intermédiaire, des défauts et rebuts générés par ces usinages, et surtout de la poussière nécessitant une évacuation et filtrage performant vis des opérateurs, ainsi qu'un nettoyage des pièces, et des équipements industriels pour éviter leur encrassement.

De plus, l'usinage d'un caisson intérieur conduit nécessairement à éliminer de la matière inutile fonctionnellement, donc à une perte de matière couteuse. Cette perte peut être encore plus importante lorsque l'usinage ou ses opérations connexes (stockage, nettoyage ...) génèrent des défauts conduisant à devoir rebuter le caisson entier.

Certains caissons réalisés en matière thermoplastique ou en acier ne nécessitent pas de reprises. Cependant, il peut être nécessaire de modifier leur panneau technique (selon le type de véhicule ou le type de gamme par exemple). Il est alors nécessaire de fabriquer un caisson intérieur complet.

L'invention a pour but de remédier à ces inconvénients en fournissant un ouvrant arrière de véhicule automobile dont le caisson intérieur est réalisé en deux parties : un cadre et un panneau technique central indépendant du cadre, mais rapporté et fixé sur celui-ci.

Ainsi, l'objet de l'invention concerne un hayon de véhicule automobile selon la revendication 1 comportant un bloc optique et un caisson intérieur (3) comprenant un cadre (7) et un ensemble d'éléments techniques (11, 12, 13, 14, 15) pour le passage ou la fixation de composants. Selon l'invention, les éléments techniques (11, 12, 13, 14, 15) sont portés par un panneau technique(10) rapporté sur le cadre (7).

Selon l'invention, le cadre (7) comporte dans sa partie supérieure (4) une première ouverture (8) pour accueillir une lunette arrière, et dans sa partie inférieure (5), une seconde ouverture (9) centrale accueillant le panneau technique (10). Cela permet de réduire le poids du caisson intérieur pour un même panneau technique (10).

Dans le même but d'allégement, le panneau technique (10) est réalisé avec une épaisseur moyenne inférieure à l'épaisseur moyenne du cadre (7).

Selon l'invention, le cadre (7) est réalisé en une première matière et le pannau technique (10) est réalisé en une seconde matière.

De préférence, la seconde matière est moins dense que la première matière. Par exemple, la seconde matière est une matière thermoplastique. Elle peut alors être choisie parmi les matières suivantes :
- polypropylène (PP) ;
- polyamide (PA) ;
- polyéthylène (PE) ;
- acrylonitrile butadiène styrène (ABS) ;
- polyéthylène téréphtalate (PET) ;
- polystyrène (PS) ;
- polycarbonate (PC) ;
- poly méthacrylate de méthyle (PMMA) ;
- ainsi que toutes variantes et toutes combinaisons de ces matières ou variantes.

La première matière peut alors avantageusement être un matériau composite à résine thermodurcissable, comme par exemple, une matière thermodurcissable renforcée de type SMC ou BMC.

Selon l'invention, le panneau technique (10) peut intégrer par moulage ou venu de matière, au moins l'un des éléments suivants :
- des trous (11) qui permettent de faire traverser des éléments (12) tels que des câblages, des tringles, des tuyaux, des interfaces de fixation ;
- des interfaces de fixations (13) pour systèmes tels qu'une serrure motorisée ou un moteur de lave vitre ;
- des formes de renfort mécanique (14) comme des nervures ou des bossages ;
- des interfaces de fixations (15) dudit panneau technique (10) sur ledit cadre (7) du caisson intérieur (3).

L'invention concerne également un procédé de fabrication de caisson intérieur d'un hayon de véhicule automobile selon la revendication 8. Selon ce procédé, on réalise les étapes suivantes :
- on réalise un cadre comportant dans sa partie supérieure une première ouverture pour accueillir une lunette arrière, et dans sa partie inférieure une seconde ouverture ;
- on réalise un panneau technique comportant un ensemble d'éléments techniques, tels que des orifices pour le passage ou la fixation de composants
- on fixe ledit panneau technique sur ledit cadre.

Selon un mode de réalisation de ce procédé, on fixe le panneau technique par vissage, collage, sertissage, surmoulage, évidemment ou une combinaison de ces techniques.

L'invention sera mieux comprise à la lecture des figures annexées, qui sont fournies à titre d'exemples et ne présentent aucun caractère limitatif, dans lesquelles :
La figure 1 illustre un hayon selon l'art antérieur, composé d'une peau extérieure et d'un caisson intérieur monobloc, c'est-à-dire venu de matière avec le cadre.
La figure 2 illustre un caisson intérieur selon l'invention, avec un panneau rapporté en double épaisseur sur un cadre.
La figure 3 illustre un panneau technique central selon l'invention, rapporté sur le cadre du caisson intérieur.
La figure 4 illustre un caisson intérieur selon l'invention, avec un panneau rapporté sur le cadre au niveau d'une ouverture (9).

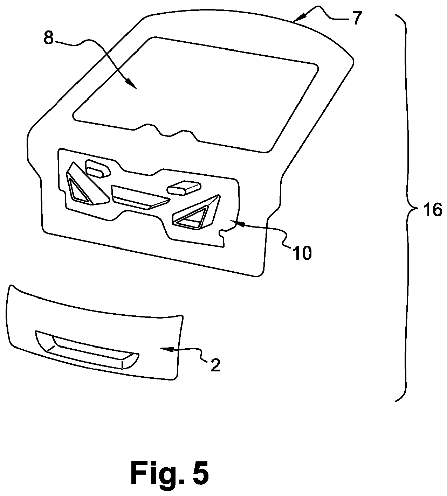

La figure 5 illustre un hayon (16) de véhicule automobile selon l'invention.

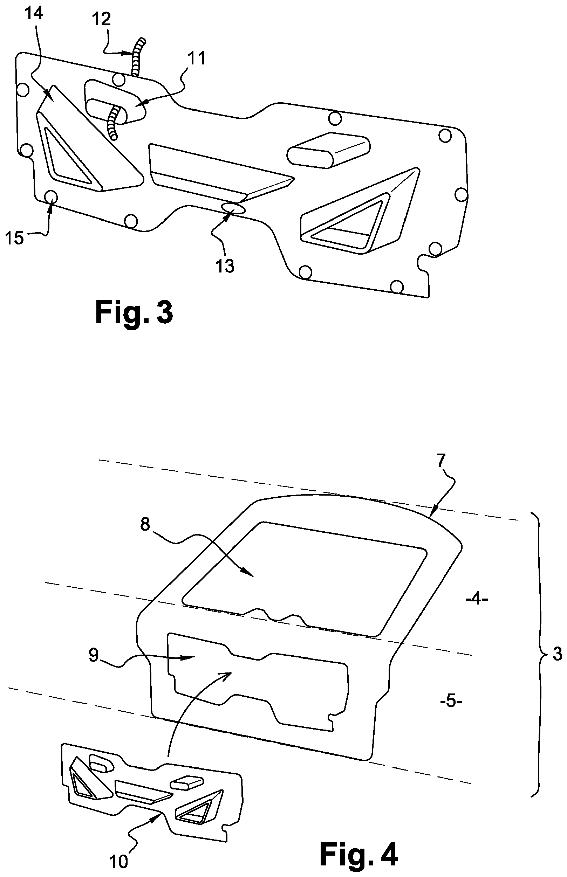

On se réfère maintenant à la figure 2 qui illustre un caisson intérieur (3) selon un premier mode de réalisation de l'invention. Il comporte :
- un cadre (7) comportant, dans sa partie supérieure (4), une première ouverture (8) destinée à accueillir une lunette arrière ;
- un panneau technique central (10) fixé sur le cadre (7) et supportant l'ensemble des éléments techniques (11, 12, 13, 14, 15 référencés sur la figure 3), tels que des orifices, pour le passage ou la fixation de composants.

Le panneau technique central (10) peut être fixé par-dessus la partie inférieure du cadre du caisson intérieur par vissage, collage, adhésivage, sertissage, surmoulage, emboitage, clipsage, évidemment ou toute combinaison de ces techniques.

De par sa conception en deux parties, le caisson intérieur (3) selon l'invention permet de limiter les reprises par usinage à un élément plus petit ce qui facilite les manipulations le stockage, réduit la taille et le coût des équipements de reprise et surtout que les rebuts ne portent pas sur l'ensemble du caisson (3).

Selon un second mode de réalisation (illustré sur la figure 4), le cadre du caisson comporte dans sa partie supérieure une première ouverture (8) pour accueillir la lunette arrière, et dans sa partie inférieure, une seconde ouverture (9) centrale accueillant le panneau technique (10).

Ce mode de réalisation permet de réduire le poids du caisson intérieur pour un même panneau technique. En effet, l'ajout d'un panneau technique par-dessus une épaisseur de cadre conduit à un alourdissement du caisson et pénalise l'accessibilité aux interfaces fonctionnelles lors de l'assemblage ou en cas d'intervention pour réparation. En ménageant une ouverture, de taille sensiblement équivalente à celle du panneau technique, bien que légèrement plus réduite, on allège le cadre du caisson intérieur.

Selon une variante (non représentée) de ce mode de réalisation, la seconde ouverture (9) débouche sur le bord inférieur du cadre (7). D'une forme en huit, le cadre (7) possède alors une forme en A (boucle inférieure du « 8 » ouverte). Dans ce cas le bord physique inférieur du caisson intérieur (3) est réalisé par le panneau technique (10) lui-même et non plus par le cadre (7).

Selon un troisième mode de réalisation, dans le même but d'allégement du caisson intérieur, on réalise un panneau technique (10) dont le poids permet d'alléger le caisson intérieur par rapport à un caisson réalisé monobloc avec une zone centrale (6) intégrée, venue de matière avec le cadre comme illustré sur la figure 1. Cet allégement du panneau technique peut être obtenu de différentes manières :
(i) en utilisant la même matière pour le panneau technique et le cadre, on peut réaliser le panneau technique ayant une épaisseur moyenne inférieure à l'épaisseur moyenne du cadre.
   On peut par exemple, utiliser une épaisseur variable pour le panneau, en ne gardant ou ajoutant de la matière que là où on en a besoin, pour renforcer le panneau ou y positionner un élément technique.
(ii) Pour réduire le poids du panneau technique, on peut également utiliser un panneau technique réalisé dans une matière moins dense que celle du cadre. Le cadre est alors réalisé en une première matière et le panneau technique est réalisé en une seconde matière moins dense que cette première matière.
   Il peut s'agir de deux grades différents d'une même matière générique, telle qu'un SMC de densité 1.8 à 2.2 pour le cadre, et un SMC de densité 1.2 à 1.7 pour le panneau technique, ces grades pouvant être obtenus par exemple en réduisant le taux de renfort ou de charge.
   Il peut également s'agir d'acier ou d'aluminium pour le cadre (7) et de matière plastique pour le panneau technique (10).
   Il peut encore s'agir d'une matière thermoplastique très rigide, par exemple avec 20 à 50% de fibres de verre pour le cadre (7) et de matière thermoplastique moins dense, par exemple avec seulement 5 à 10% de fibres de verre, pour le panneau technique (10).
(iii) Un autre avantage de l'invention, est que l'on peut aussi choisir des première et seconde matières de nature différente :
   - la première matière, du cadre, peut ainsi être un matériau composite, de préférence avec résine thermodurcissable, comportant des charges de renfort de type fibres, mats ou tissus de verre, ou de carbone. Ce matériau composite a l'avantage de conférer une bonne rigidité au cadre du caisson intérieur tout en limitant le poids de cette structure. On peut par exemple utiliser une matière thermodurcissable de type SMC ou BMC.
   - La seconde matière, du panneau technique rapporté, peut ainsi être une matière thermoplastique. Elle peut notamment être choisie parmi les matières suivantes:
      - polypropylène (PP) ;
      - polyamide (PA) ;
      - polyéthylène (PE) ;
      - acrylonitrile butadiène styrène (ABS) ;
      - polyéthylène téréphtalate (PET) ;
      - polystyrène (PS) ;
      - polycarbonate (PC) ;
      - poly méthacrylate de méthyle (PMMA) ;
      - ainsi que toutes variantes (de grades et de renforts ...) et toutes combinaisons de ces matières ou variantes (par exemple ABS/PC).

Ainsi, selon un mode de réalisation préféré de l'invention, le caisson intérieur comporte un cadre (7) en matière thermodurcissable chargée de type SMC ou BMC. Le cadre comporte dans sa partie inférieure une ouverture (9) dans laquelle est fixé un panneau technique (10) réalisé en matière thermoplastique, de préférence en polypropylène.

L'avantage de cette solution réside non seulement dans l'allégement du caisson intérieur, mais également dans le moulage par injection du panneau technique (10). En effet, l'utilisation de matière thermoplastique permet de réaliser les évidements techniques ou d'allégement, non plus par usinage en reprise, mais directement par moulage. Ainsi, le panneau technique central (10) intègre par moulage, au moins l'un des éléments suivants (figure 3):
- des trous ou orifices (11) qui permettent de faire traverser des éléments (12) tels que des câblages, des tringles, des tuyaux, des interfaces de fixation ;
- des interfaces de fixations (13) sur le panneau de systèmes, tels que des serrures motorisées ou des moteurs de lave vitre. Il peut s'agir de pistes de collage ou des trous de sertissage par exemple ;
- des formes de renfort mécanique comme des nervures ou des bossages (14) ;
- des interfaces de fixations (15) du panneau technique sur le cadre du caisson intérieur (fixation de type discontinu (type des vis/rivets...) ou de type continu (surmoulage ou collage).

L'invention concerne également un hayon (16) de véhicule automobile comportant un caisson intérieur selon l'invention. Un tel hayon est représenté en figure 4. Il comporte par-dessus et fixé au caisson intérieur, une peau extérieure (2) comportant les éléments extérieurs visibles depuis l'extérieur du véhicule.

L'invention concerne également un procédé de fabrication du caisson intérieur selon l'invention. Ce procédé comporte les étapes suivantes, dont l'ordre est indifférent :
- on réalise un cadre comportant dans sa partie supérieure une première ouverture pour accueillir une lunette arrière, et dans sa partie inférieure une seconde ouverture ;
- on réalise séparément un panneau technique comportant un ensemble d'éléments techniques, tels que des orifices pour le passage ou la fixation de composants ;
- on fixe le panneau technique sur le cadre.

## Revendications

1. Hayon de véhicule automobile comportant un bloc optique, un caisson intérieur (3) et une peau extérieure (2) fixée sur ledit caisson intérieur (3), le caisson intérieur (3) comprenant un cadre (7) et un ensemble d'éléments techniques (11, 12, 13, 14, 15) pour le passage ou la fixation de composants, lesdits éléments techniques (11, 12, 13, 14, 15) étant portés par un panneau technique(10) rapporté sur ledit cadre (7), ledit cadre (7) comportant dans sa partie supérieure (4) une première ouverture (8) pour accueillir une lunette arrière, et dans sa partie inférieure (5), une seconde ouverture (9) centrale, accueillant ledit panneau technique (10), ledit cadre (7) étant réalisé en une première matière et ledit panneau technique (10) étant réalisé en une seconde matière moins dense que ladite première matière, **caractérisé en ce que** la peau extérieure (2) étant fixée sur ledit caisson intérieur (3), en recouvrant le panneau technique (10).

2. Hayon de véhicule automobile selon la revendication 1, dans lequel le panneau technique (10) est réalisé avec une épaisseur moyenne inférieure à l'épaisseur moyenne dudit cadre (7).

3. Hayon de véhicule automobile selon l'une des revendications précédentes, dans lequel la seconde matière est une matière thermoplastique.

4. Hayon de véhicule automobile selon l'une des revendications précédentes, dans lequel la seconde matière est choisie parmi les matières suivantes :
• polypropylène (PP) ;
• polyamide (PA) ;
• polyéthylène (PE) ;
• acrylonitrile butadiène styrène (ABS) ;
• polyéthylène téréphtalate (PET) ;
• polystyrène (PS) ;
• polycarbonate (PC) ;
• poly méthacrylate de méthyle (PMMA) ;
• ainsi que toutes variantes et toutes combinaisons de ces matières ou variantes.

5. Hayon de véhicule automobile selon l'une des revendications précédentes, dans lequel la première matière est un matériau composite à résine thermodurcissable.

6. Hayon de véhicule automobile selon la revendication 5, dans lequel la première matière est une matière thermodurcissable renforcée de type SMC ou BMC.

7. Hayon de véhicule automobile selon l'une des revendications précédentes, dans lequel le panneau technique (10) intègre par moulage ou venu de matière, au lequel le panneau technique (10) intègre par moulage ou venu de matière, au moins l'un des éléments suivants :
• des trous (11) qui permettent de faire traverser des éléments (12) tels que des câblages, des tringles, des tuyaux, des interfaces de fixation ;
• des interfaces de fixations (13) pour systèmes tels qu'une serrure motorisée ou un moteur de lave vitre ;
• des formes de renfort mécanique (14) comme des nervures ou des bossages ;
• des interfaces de fixations (15) dudit panneau technique (10) sur ledit cadre (7) du caisson intérieur (3).

8. Procédé de fabrication d'un hayon de véhicule automobile comportant un bloc optique, un caissor intérieur et une peau extérieure, **caractérisé en ce que** l'on réalise les étapes suivantes :
• on réalise un cadre, en une première matière, comportant dans sa partie supérieure une première ouverture pour accueillir une lunette arrière, et dans sa partie inférieure une seconde ouverture ;
• on réalise un panneau technique, en une seconde matière, moins dense que ladite première matière, comportant un ensemble d'éléments techniques, tels que des orifices pour le passage ou la fixation de composants ;
• on fixe ledit panneau technique sur ledit cadre,
• on fixe la peau extérieure sur le caisson intérieur de sorte que la peau extérieure recouvre le panneau technique.

9. Procédé selon la revendication 8, dans lequel on fixe ledit panneau technique par vissage, collage, sertissage, surmoulage, évidemment ou une combinaison de ces techniques.

## Patentansprüche

1. Heckklappe eines Kraftfahrzeugs mit einem Kotflügel, einem inneren Kasten (3) und einer Außenhaut (2), die an dem inneren Kasten (3) befestigt ist, wobei der innere Kasten (3) einen Rahmen (7) und einen Satz technischer Elemente (11, 12, 13, 14, 15) für den Durchgang oder die Befestigung von Bauteilen aufweist, wobei die technischen Elemente (11, 12, 13, 14, 15) von einer technischen Platte (10) getragen werden, die an dem Rahmen (7) befestigt ist, wobei der Rahmen (7) in seinem oberen Teil (4) eine erste Öffnung (8) zur Aufnahme einer Heckscheibe und in seinem unteren Teil (5) eine zweite zentrale Öffnung (9) aufweist, die die technische Platte (10) aufnimmt, wobei der Rahmen (7) aus einem ersten Material und die technische Platte (10) aus einem zweiten Material hergestellt ist, das eine geringere Dichte als das erste Material aufweist, **dadurch gekennzeichnet, dass** die Außenhaut (2) an dem inneren Kasten (3) befestigt ist, die die technische Platte (10) bedeckt.

2. Heckklappe eines Kraftfahrzeugs nach Anspruch 1, wobei die technische Platte (10) mit einer durchschnittlichen Dicke hergestellt ist, die geringer ist als die durchschnittliche Dicke des Rahmens (7).

3. Heckklappe eines Kraftfahrzeugs nach einem der vorstehenden Ansprüche, bei der das zweite Material ein Thermoplast ist.

4. Heckklappe eines Kraftfahrzeugs nach einem der vorstehenden Ansprüche, bei der das zweite Material aus den folgenden Materialien ausgewählt wird:
- Polypropylen (PP);
- Polyamid (PA);
- Polyethylen (PE);
- Acrylnitril-Butadien-Styrol (ABS);
- Polyethylenterephthalat (PET);
- Polystyrol (PS);
- Polycarbonat (PC);
- Polymethylmethacrylat (PMMA);
- sowie alle Varianten und Kombinationen dieser Materialien, oder Varianten.

5. Heckklappe eines Kraftfahrzeugs nach einem der vorstehenden Ansprüche, wobei das erste Material ein wärmehärtbares Harzverbundmaterial ist.

6. Heckklappe eines Kraftfahrzeugs nach Anspruch 5, wobei das erste Material ein verstärktes duroplastisches Material vom Typ SMC oder BMC ist.

7. Heckklappe eines Kraftfahrzeugs nach einem der vorstehenden Ansprüche, in die die technische Platte (10) durch Gießen oder einstückig integriert ist, in die die durch Gießen oder einstückig geformte technische Platte (10) mindestens eines der folgenden Elemente integriert:
- Löcher (11) die den Durchgang von Elementen (12) wie Drähten, Stangen, Rohren, Befestigungsschnittstellen ermöglichen;
- Befestigungsschnittstellen (13) für Systeme wie ein motorisiertes Schloss oder ein Scheibenwaschmotor;
- mechanische Verstärkungsformen (14) wie Rippen oder Vorsprünge;
- Befestigungsschnittstellen (15) der besagten technischen Platte (10) auf dem besagten Rahmen (7) des inneren Kastens (3).

8. Verfahren zur Herstellung einer Heckklappe eines Kraftfahrzeugs mit einer optischen Einheit, einem Innengehäuse und einer Außenhaut, **dadurch gekennzeichnet, dass** die folgenden Schritte durchgeführt werden:
- Herstellen eines Rahmens aus einem ersten Material, der in seinem oberen Teil eine erste Öffnung zur Aufnahme einer Heckscheibe und in seinem unteren Teil eine zweite Öffnung aufweist;
- Herstellen einer technischen Platte aus einem zweiten Material, das eine geringere Dichte als das erste Material aufweist, das eine Gruppe von technischen Elementen aufweist, wie Öffnungen für den Durchgang oder die Befestigung von Bauteilen;
- Befestigen der technischen Platte an dem Rahmen;
- Befestigen der Außenhaut an dem inneren Kastens, so dass die Außenhaut die technische Platte bedeckt.

9. Verfahren nach Anspruch 8, bei dem die technische Platte durch Schrauben, Kleben, Crimpen, Umspritzen, natürlich oder durch eine Kombination dieser Techniken befestigt wird.

## Claims

1. Motor vehicle tailgate comprising a light unit, an inner box (3) and an outer skin (2) attached to said inner box (3), said inner box (3) comprising a frame (7) and a set of technical elements (11, 12, 13, 14, 15) for components to pass through or be secured to, said technical elements (11, 12, 13, 14, 15) being carried by a technical panel (10) fitted onto said frame (7), said frame (7) having in its upper portion (4) a first opening (8) to accommodate a rear window, and in its lower portion (5) a second central opening (9), accommodating said technical panel (10), said frame being made of a first material and said technical panel (10) being made of a second material less dense than the first material, **characterized in that** the outer skin (2) is attached to the inner box (3) by covering the technical panel (10).

2. Motor vehicle tailgate according to claim 1, wherein the average thickness of the technical panel (10) is less than that of said frame (7).

3. Motor vehicle tailgate according to any one of the preceding claims, wherein the second material is a thermoplastic material.

4. Motor vehicle tailgate according to any one of the preceding claims, wherein the second material is selected from the following materials:
• polypropylene (PP);
• polyamide (PA);
• polyethylene (PE);
• acrylonitrile butadiene styrene (ABS);
• polyethylene terephthalate (PET);
• polystyrene (PS);
• polycarbonate (PC);
• polymethylmethacrylate (PMMA);
• as well as all variants and all combinations of these materials or variants.

5. Motor vehicle tailgate according to any one of the preceding claims, wherein he first material is a composite material with thermoset resin.

6. Motor vehicle tailgate according to any one of the preceding claims, wherein the first material is a reinforced thermoset material such as SMC or BMC.

7. Motor vehicle tailgate according to any one of the preceding claims, wherein the technical panel (10) integrates by moulding, or is integrally formed with, at least one of the following elements:
• holes (11) for components (12) such as wires, linkages, pipes, attachment interfaces to pass through;
• attachment interfaces (13) for systems such as a motorised lock or a window washer motor;
• mechanical strengthening shapes (14) such as ribs or bosses;
• interfaces (15) for attaching said technical panel (10) to said frame (7) of the inner box (3).

8. Method for manufacturing a motor vehicle tailgate comprising a light unit, an inner box and an outer skin, **characterised in that** the following steps are performed:
• providing a frame, made of a first material, having in its upper portion a first opening to accommodate a rear window, and in its lower portion a second opening;
• providing a technical panel, made of a second material less dense than the first material, having a set of technical elements, such as holes for components to pass through or be secured to;
• attaching said panel to said frame,
• attaching the outer skin to the inner box such that the outer skin covers the technical panel.

9. Method according to claim 8, wherein said technical panel is fastened by screwing, bonding, crimping, overmoulding, hollowing out or a combination of these techniques.
